# FASCICULE DE BREVET EUROPEEN

(11) **EP 4 286 137 B1**
(45) Date de publication et mention de la délivrance du brevet: **13.11.2024**
(21) Numéro de dépôt: 23171079.9
(22) Date de dépôt: 02.05.2023
(51) Int. Cl.: B29C 49/06, B29C 49/64, B29C 49/78, B29C 49/68

(54) **PROCEDE DE CONDITIONNEMENT THERMIQUE DE PREFORMES**
VERFAHREN ZUR THERMISCHEN KONDITIONIERUNG VON VORFORMLINGEN
METHOD FOR THE THERMAL CONDITIONING OF PREFORMS

(30) Priorité: 01.06.2022 FR 2205249
(43) Date de publication de la demande: 06.12.2023
(73) Titulaire: Sidel Participations, 76930 Octeville-sur-Mer (FR)
(72) Inventeur: CHOMEL, Nicolas, 76930 OCTEVILLE-SUR-MER (FR); SOUFFES, Denis, 76930 OCTEVILLE-SUR-MER (FR); FEUILLOLEY, Guy, 76930 OCTEVILLE-SUR-MER (FR); BRACHET, Vincent, 76930 OCTEVILLE-SUR-MER (FR); MOUCHELET, Marc, 76930 OCTEVILLE-SUR-MER (FR)
(74) Mandataire: Sidel Group

(56) Documents cités:
- US-A1- 2022 032 528
- US-A1- 2022 106 178
- US-B2- 10 363 697

## Description

### Domaine technique de l'invention

L'invention se rapporte à un procédé de conditionnement thermique de préformes avant leur formage, notamment par étirage-soufflage dans une installation de production de récipient.

De tels procédés selon l'art antérieur sont décrits dans les documents US10363697B2, US2022/032528A1 et US2022/106178A1.

### Arrière-plan technique

Il est connu de fabriquer des récipients par formage, notamment par étirage-soufflage, de préformes en matériau thermoplastique. Le matériau formant les préformes est généralement dans un état amorphe qui n'est pas apte à permettre leur formage à froid. Préalablement à l'opération de formage, les préformes sont donc chauffées à une température de transition vitreuse qui permet leur conformation en récipient final.

Plus particulièrement, les préformes présentent généralement un corps sensiblement cylindrique de révolution à paroi tubulaire épaisse qui est fermé à l'une de ses extrémités axiales par un fond à paroi épaisse, et qui est prolongé à son autre extrémité par un col, lui aussi tubulaire. Le col est conformé à sa forme et à ses dimensions définitives tandis que le corps de la préforme est destiné à subir une déformation relativement importante pour le conformer en récipient lors d'une étape de formage.

Pour cette raison, il est préférable que seul le corps de la préforme soit chauffé au-delà de la température de transition vitreuse, le col demeurant à une température inférieure à ladite température de transition vitreuse pour éviter sa déformation pendant la fabrication du récipient.

Par ailleurs, la température du corps ne doit pas non plus dépasser une température de cristallisation qui est supérieure à la température de transition vitreuse. Au-delà de cette température de cristallisation, le matériau thermoplastique se cristallise et ne présente plus les propriétés mécaniques permettant de réaliser un formage de qualité requise. Il est important que la cristallisation du matériau ne soit induite, de manière maîtrisée, que pendant l'opération de formage afin que les chaînes polymériques soient orientées dans des directions requises.

La fabrication de récipients en grande série est réalisée dans une installation de production qui comporte une station de chauffage qui permet, lors d'une étape de chauffage, de rendre malléable le corps de la préforme par chauffage au-delà de la température de transition vitreuse. Lors de l'étape de chauffage, chaque préforme est transportée le long d'un trajet de chauffage exposé à un rayonnement chauffant.

L'installation de production comporte aussi une station de formage qui est agencée en aval de la station de chauffage selon le sens de circulation des préformes dans l'installation de production. Lors de l'étape de formage, la préforme chaude est placée dans une unité de formage, par exemple dans un moule de la station de formage qui présente une empreinte de moulage conforme au récipient à obtenir. Un fluide sous pression, tel que de l'air, est alors injecté dans le corps malléable de la préforme afin d'en plaquer la paroi contre l'empreinte du moule. Généralement, l'injection de fluide sous pression est précédée et/ou accompagnée d'un étirage axial de la préforme, notamment au moyen d'une tige d'étirage insérée dans la préforme. De manière connue, le corps est ainsi soumis à un étirage bi-axial.

Entre l'étape de chauffage et l'étape de formage, chaque préforme est transportée le long d'un trajet de diffusion qui n'est pas exposé au rayonnement chauffant et qui s'étend depuis une extrémité aval du trajet de chauffage jusqu'à la station de formage. Durant ce transport, les préformes subissent passivement une étape de diffusion de la chaleur emmagasinée dans leur paroi. Cette étape permet notamment à la chaleur de se diffuser dans l'épaisseur de la paroi de la préforme afin d'obtenir une distribution optimale de la chaleur.

Par exemple, il est préférable que, au moment de son formage, la paroi de la préforme présente un gradient thermique croissant dans le sens de son épaisseur depuis sa face externe vers sa face interne. Ce gradient est produit par diffusion passive de la chaleur à travers la paroi vers l'intérieur de la préforme pendant l'étape de diffusion.

A l'issue de cette étape de diffusion, chaque préforme est transférée dans des unités de formage de la station de formage lors d'une étape de transfert.

La température des préformes le long de leur déplacement dans l'installation de production est un paramètre essentiel qu'il est important de maîtriser pour obtenir un récipient de bonne qualité à l'issue de l'étape de formage.

Par exemple si une portion du corps d'une préforme est trop froide lors de l'opération de formage, cela peut détériorer la qualité du récipient obtenu voire percer le récipient. Pour que la préforme ne refroidisse pas, il est donc important que la durée de l'étape de diffusion, dite par la suite "durée de diffusion", soit assez courte et/ou que la quantité de chaleur accumulée dans la préforme soit suffisante.

Au contraire, si une portion du corps d'une préforme est trop chaude, il peut se produire une cristallisation du matériau avant son formage, provoquant une dégradation importante de la qualité du récipient produit. Une telle cristallisation peut intervenir pendant le chauffage, ou même pendant le transport de la préforme depuis la station de chauffage jusqu'à la station de formage. Ce dernier cas peut apparaître lorsque la préforme a emmagasiné une grande quantité de chaleur dans son épaisseur et que la durée de diffusion est trop importante.

Par ailleurs, pour la fabrication de certains récipients, le corps des préformes est divisé en plusieurs zones qui doivent être chauffées à des températures différentes afin de maîtriser la répartition du matériau thermoplastique durant l'opération de formage. Une zone chauffée à une température élevée aura tendance à pouvoir être étirée avec moins d'effort qu'une zone chauffée à une température plus basse. L'étape de diffusion doit donc être assez longue pour obtenir une distribution optimale de la température dans chaque zone, mais assez courte pour que la frontière thermique entre deux zones demeure suffisamment nette.

Pour résoudre ces problèmes, il est donc connu de piloter la puissance des moyens de chauffage de la station de chauffage et les moyens de ventilation pour éviter de surchauffer la face externe de la préforme, par exemple lorsque les moyens de chauffage sont des lampes à infrarouge.

En outre, la durée de diffusion est dépendante de la cadence de production de la station de formage, comme expliqué ci-dessous.

Le transport des préformes le long du trajet de diffusion est effectué par des moyens de convoyage comportant des organes de préhension individuels de chaque préforme. On détermine un pas entre deux préformes successive comme étant la distance entre ces deux préformes selon le sens de déplacement le long du trajet de diffusion. En chaque point du trajet de diffusion, le pas entre deux préformes est fixé indépendamment de la cadence de fonctionnement de la station de soufflage.

Dans certaines installations de production, le pas est le même en tout point du trajet de diffusion. Pour d'autres installations de production, il peut arriver que le pas ne soit pas le même en différents endroits du circuit. Mais même en cas de changement de pas au long du trajet de diffusion, le pas demeure invariable dans le temps en chaque point du trajet de diffusion.

Ainsi, les vitesses des préformes sont susceptibles de varier proportionnellement à la cadence de production, mais le pas demeure indépendant de la vitesse en chaque point du trajet de diffusion.

Pendant très longtemps, et encore aujourd'hui dans la majorité des installations de production, cette propriété est imposée par la structure des moyens de convoyage. C'est notamment le cas lorsque les organes de préhension sont liés mécaniquement les uns aux autres. Ainsi, les moyens de convoyage de la station de chauffage sont souvent formés par une chaîne d'organes de préhension articulés les uns aux autres, et les moyens de convoyage entre la station de chauffage et la station de formage sont formés par au moins une roue comportant à sa périphérie des organes de préhensions fixes ou portés par des bras.

Même lorsque les bras sont articulés pour permettre un changement de pas entre les préformes, le mouvement des bras est commandé par des cames fixes qui ne permettent pas de modifier le pas entre deux préformes en fonction de la cadence de production.

Depuis peu, il existe aussi des moyens de convoyage à moteur linéaire dans lesquels les organes de préhension sont portés par des navettes indépendantes. Ces moyens de convoyage sont notamment utilisés pour permettre d'augmenter l'efficacité du tunnel de chauffage en serrant au plus les préformes pendant leur chauffage, puis en les écartant du pas requis pour leur transmission au moyens de convoyage aval en sortie de station de chauffage. Cependant, ni la distance parcourue par les navettes après leur sortie du tunnel de chauffage, ni la loi de commande des navettes ne permettent de réguler la durée de diffusion indépendamment de la cadence de production.

Quel que soit le mode de réalisation de l'installation de production, la durée de diffusion varie proportionnellement à la cadence de production. Il est donc connu de réguler la cadence de production afin que la durée de diffusion demeure dans un intervalle de valeurs dans lequel la qualité du récipient obtenu soit acceptable. De ce fait, les cadences de production auxquelles l'installation de production est susceptible de fonctionner sont limitées à une plage de fonctionnement contrainte notamment par la durée de diffusion. Ainsi, dans les installations de production de l'état de la technique, la cadence de production forme une consigne de commande de l'installation de production, tandis que la durée de diffusion forme uniquement une contrainte qui limite la plage de fonctionnement dans laquelle la cadence de production peut varier. Une consigne est définie comme étant un paramètre sur lequel un opérateur peut directement agir, par exemple en entrant une valeur dans un pupitre de commande. Au contraire, une contrainte n'est pas un paramètre sur lequel un opérateur peut agir. Une contrainte limite seulement les valeurs que l'opérateur peut assigner à un paramètre, ici la cadence de production.

L'intervalle de valeur de la durée de diffusion est généralement fixé par les caractéristiques structurelles de l'installation de production, notamment la longueur du trajet de diffusion, qu'on maintient relativement courte, notamment pour des raisons de coûts de fabrication de l'installation de production.

Ainsi, quel que soit le moyen de convoyage utilisé, l'homme du métier n'a jamais considéré que la durée de diffusion puisse former une consigne de commande indépendante de la cadence de production afin d'améliorer la qualité du récipient obtenu.

La modification de la plage de fonctionnement de la machine passe donc à ce jour par la modification de la longueur du trajet de diffusion. De telles modifications sont très onéreuses et la durée de diffusion reste dépendante de la cadence de production.

Il existe donc un besoin d'élargir la plage de fonctionnement des installations de production de récipients.

En outre, il existe aussi un besoin pour réaliser des récipients présentant rigoureusement la même qualité, indépendamment de la cadence de production appliquée.

### Résumé de l'invention

L'invention se rapporte à un procédé de conditionnement thermique de préformes avant leur formage, notamment par étirage-soufflage, dans une installation de production de récipients, le procédé comportant :
- au moins une première étape de chauffage de chaque préforme par transport le long d'un trajet de chauffage exposé à un rayonnement chauffant, les préformes sortant du trajet de chauffage avec une cadence de production déterminée ;
- une deuxième étape de diffusion de la chaleur emmagasinée dans chaque préforme lors de laquelle les préformes sont transportées en file le long d'un trajet de diffusion qui n'est pas exposé au rayonnement chauffant et qui s'étend depuis une extrémité aval du trajet de chauffage jusqu'à une station de formage des préformes ;
- une troisième étape de transfert des préformes, à l'issue de l'étape de diffusion, dans des unités de formage de la station de formage à ladite cadence de production déterminée,
caractérisé en ce que le trajet de diffusion comporte au moins un tronçon tampon final que les préformes parcourent en une durée ajustable.

Selon un autre aspect de l'invention, la durée de l'étape de diffusion, dite "durée de diffusion", est commandée indépendamment de la cadence de production par adaptation de la durée ajustable.

Selon un autre aspect de l'invention, une consigne de durée de diffusion est sélectionnée, la durée ajustable étant commandée automatiquement en fonction de la cadence de production pour maintenir la durée de diffusion égale à la consigne indépendamment de la cadence de production.

Selon un autre aspect de l'invention, la durée ajustable est commandée de manière que la durée de diffusion soit identique pour chaque préforme.

Selon un autre aspect de l'invention, la durée ajustable est susceptible d'occuper plusieurs valeurs dans un intervalle délimité par une borne inférieure minimale et par une borne supérieure pour une cadence de production donnée.

Selon un autre aspect de l'invention, la borne inférieure dépend de la longueur du tronçon tampon final et de la vitesse maximale susceptible d'être atteinte par la préforme en chaque point du tronçon tampon final.

Selon un autre aspect de l'invention, la borne supérieure dépend de la longueur du tronçon tampon final et de la cadence de production.

Selon un autre aspect de l'invention, la cadence de production est susceptible d'être commandée entre une cadence maximale et une cadence minimale lors de la production de récipients, la longueur du tronçon tampon final et/ou la vitesse maximale des préformes sur le tronçon tampon final étant déterminée de manière que la durée ajustable puisse être commandée afin qu'au moins une valeur de durée de diffusion puisse demeurer constante pour toute cadence de production comprise entre la cadence maximale et la cadence minimale.

Selon un autre aspect de l'invention, les préformes sont transportées le long du tronçon tampon final par des navettes mises en mouvement indépendamment les unes des autres au moyen d'un moteur linéaire ou d'un dispositif pneumatique.

Selon un autre aspect de l'invention, les préformes se déplacent le long du tronçon tampon final avec un profil de vitesses identique.

Selon un autre aspect de l'invention, les préformes sont transférées successivement une par une dans la station de formage.

Selon un autre aspect de l'invention, un nombre déterminé de plusieurs préformes successives forment un groupe, les préformes d'un même groupe étant transférées simultanément dans la station de formage.

Selon un autre aspect de l'invention, les préformes successives d'un même groupe se déplacent le long du tronçon tampon final avec des profils de vitesses différents de manière que la durée de diffusion soit la même pour toutes les préformes du groupe.

Selon un autre aspect de l'invention, l'étape de chauffage comporte deux sous-étapes de chauffage successives précédent l'étape de diffusion, les deux sous-étapes de chauffage étant séparées par une étape de transport intermédiaire des préformes en file, le trajet de chauffage étant divisé en un tronçon amont de chauffage et en un tronçon aval de chauffage reliés par un trajet de transition.

Selon un autre aspect de l'invention, le trajet de transition comporte au moins un tronçon tampon intermédiaire que les préformes parcourent en une durée réglable qui est commandée indépendamment de la cadence de production.

### Brève description des figures

D'autres caractéristiques et avantages de l'invention apparaîtront au cours de la lecture de la description détaillée qui va suivre pour la compréhension de laquelle on se reportera aux dessins annexés que nous décrivons brièvement par la suite.
[Fig.1] est une vue de dessus qui représente schématiquement une première installation de production de récipients réalisée selon l'état de la technique.
[Fig.2] est une vue similaire à celle de la figure 1 qui représente une deuxième installation de production de récipients réalisée selon l'état de la technique.
[Fig.3] est une vue de côté qui représente un exemple de préforme susceptible d'être prise en charge par des installations de production de récipient selon l'invention.
[Fig.4] est une vue de détail à plus grande échelle qui représente en coupe la portion de paroi de préforme entourée dans le cercle IV de la figure 3.
[Fig.5] est une vue en coupe transversale par rapport à la direction de déplacement des préformes qui représente un moyen de convoyage de préformes à moteur linéaire mise en oeuvre dans les installations de production réalisées selon les enseignements de l'invention.
[Fig.6] est une vue de côté qui représente un récipient final obtenu après formage de la préforme de la figure 3 dans une installation de production de récipients.
[Fig.7] est un schéma-bloc qui représente un premier mode de réalisation d'un procédé de conditionnement thermique des préformes dans une installation de production selon les enseignements de l'invention.
[Fig.8] est un schéma-bloc qui représente un deuxième mode de réalisation d'un procédé de conditionnement thermique des préformes dans une installation de production selon les enseignements de l'invention.
[Fig.9] est une vue de dessus qui représente schématiquement un premier mode de réalisation d'une installation de production de récipients qui est apte à mettre en oeuvre le procédé de conditionnement thermique réalisé selon les enseignements de l'invention.
[Fig.10] est une vue de dessus qui représente schématiquement un deuxième mode de réalisation d'une installation de production de récipients qui est apte à mettre en oeuvre le procédé de conditionnement thermique réalisé selon les enseignements de l'invention.
[Fig.11] est une vue de dessus qui représente schématiquement un troisième mode de réalisation d'une installation de production de récipients qui est apte à mettre en oeuvre le procédé de conditionnement thermique réalisé selon les enseignements de l'invention.
[Fig.12] est une vue de dessus qui représente un trajet de diffusion parcouru par les préformes dans l'installation de production de la figure 9, les préformes parcourant un tronçon tampon final du trajet de diffusion en une durée minimale.
[Fig.13] est une vue de dessus qui représente un trajet de diffusion parcouru par les préformes dans l'installation de production de la figure 9, les préformes parcourant un tronçon tampon final du trajet de diffusion en une durée minimale.

### Description détaillée de l'invention

Dans la suite de la description, des éléments présentant une structure identique ou des fonctions analogues seront désignés par une même référence.

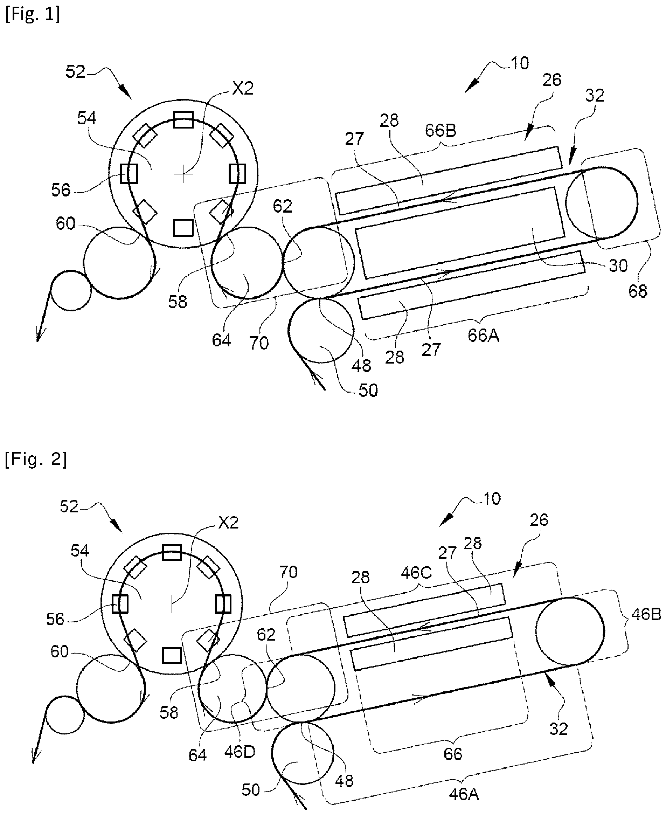

On a représenté schématiquement aux figures 1 et 2 des installations 10 de production en série de récipients 12 en matériau thermoplastique à partir de préformes 14. Ces installations 10 de production représentées aux figures 1 et 2 sont réalisées selon l'état de la technique.

Dans la suite de la description, les préformes 14 se déplacent dans l'installation 10 de production le long d'un itinéraire de production depuis l'amont vers l'aval. Les préformes 14 sont déplacées en file le long de l'itinéraire de production par des moyens de convoyage qui seront détaillés par la suite.

De manière non limitative, les récipients 12 sont ici des bouteilles. Le matériau thermoplastique est ici formé par du polyéthylène téréphtalate, désigné par la suite sous son acronyme "PET".

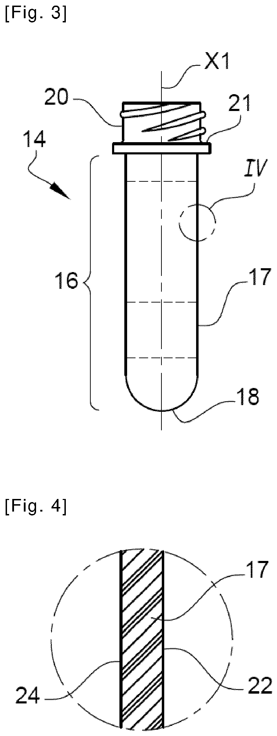

On a représenté à la figure 3 un exemple d'une telle préforme 14. La préforme 14 présente un axe "X1" principal représenté verticalement à la figure 3. Elle présente un corps 16 cylindrique à paroi 17 tubulaire fermé à l'une de ses extrémités axiales par un fond 18, représentée ici au bas de la figure, et qui est ouvert à son autre extrémité par un col 20, lui aussi tubulaire. A sa base, le col 20 présente ici une collerette 21.

Comme représenté en vue de détail à la figure 4, la paroi 17 est délimitée par une face 22 externe et par une face 24 interne. Le col 20 présente généralement sa forme définitive tandis que le corps 16 de la préforme 14 est destiné à subir une déformation relativement importante pour former le récipient 12 final lors d'une étape de formage.

En se reportant aux figures 1 et 2, l'installation 10 de production réalisée selon l'état de la technique comporte une station 26 de chauffage des préformes 14. A titre d'exemple non limitatif, la station 26 de chauffage comporte au moins un tunnel 27 de chauffage dans lequel sont agencés des émetteurs 28 de chauffage émettant un rayonnement électromagnétique chauffant, par exemple un rayonnement infrarouge. Ces émetteurs 28 de chauffage ont pour fonction de chauffer le corps 16 des préformes 14 au-delà d'une température de transition vitreuse pour les rendre suffisamment malléable en vue de leur formage. Le corps 16 des préformes 14 doit cependant demeurer à une température inférieure à une température de cristallisation.

Dans l'exemple représenté à la figure 1, les émetteurs 28 de chauffage sont formés par des lampes halogènes. Dans ce cas, la station 26 de chauffage comporte généralement deux tunnels 27 de chauffage pour que les préformes 14 puissent bénéficier d'un temps d'exposition suffisant au rayonnement chauffant.

Le rayonnement chauffant émis par de tels émetteurs 28 de chauffage est généralement absorbé en majorité au niveau de la face 22 externe des préformes 14. De ce fait la face 22 externe est susceptible de surchauffer avant que la paroi 17 n'ait absorbé la quantité de chaleur nécessaire pour que la totalité de la paroi 17 soit chauffée au-delà de la température de transition vitreuse. Les tunnels 27 de chauffage sont donc généralement équipés de moyens 30 de ventilation qui ont pour objectif de refroidir la face 22 externe des préformes 14 pour éviter leur surchauffe, pouvant par exemple aboutir à leur cristallisation. Dans l'exemple représenté à la figure 1, les émetteurs 28 de chauffage sont agencés d'un côté du tunnel 27 de chauffage associé tandis que les moyens 30 de ventilation sont agencés sur un côté opposé du tunnel 27 de chauffage.

En variante représentée à la figure 2, une telle installation 10 de production réalisée selon l'état de la technique comporte des émetteurs 28 de chauffage formés par des émetteurs laser. Le rayonnement chauffant émis par de tels émetteurs 28 de chauffage pénètre généralement plus profondément dans l'épaisseur de la paroi 17. Il en résulte que les préformes 14 n'ont pas besoin d'une durée d'exposition aussi longue qu'avec des lampes halogènes pour absorber la quantité de chaleur requise pour leur formage. L'installation 10 de production de la figure 2 comporte donc un unique tunnel 27 de chauffage plus court que la longueur cumulée des deux tunnels 27 de chauffage de l'installation 10 de production représentée à la figure 1. En conséquence de cette exposition plus courte, l'installation 10 de production représentée à la figure 2 ne comporte pas non plus de moyens de ventilation car le risque de surchauffe de la préforme 14 est faible voire nul. Il est donc possible d'agencer des émetteurs 28 de chauffage des deux côté du tunnel 27 de chauffage.

Dans chacune des installations 10 de production représentées aux figures 1 et 2, la station 26 de chauffage comporte aussi un dispositif 32 de convoyage des préformes 14 sur une partie de leur itinéraire. Le dispositif 32 de convoyage est notamment agencé de manière à les faire défiler le long du tunnel 27 de chauffage. Le sens de défilement des préformes 14 est indiqué par les flèches de la figure 1.

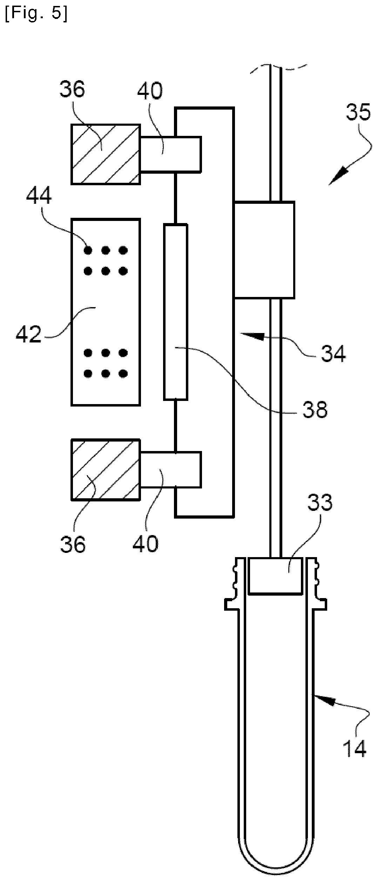

Le dispositif 32 de convoyage comporte des organes 33 de préhension dont chacun est apte à saisir individuellement une préforme 14, généralement par son col 20. Un tel organe 33 de préhension est par exemple formé par un mandrin qui est inséré à l'intérieur du col 20 de la préforme 14 puis serré par expansion radiale, comme cela est représenté à la figure 5. Il existe plusieurs types de dispositifs 32 de convoyage.

Les organes 33 de préhension sont par exemple portés par les maillons d'une chaîne sans fin qui circule autour de deux roues de guidage, dont l'une est motrice. Dans ce cas, tous les organes 33 de préhension circulent simultanément à la même vitesse.

En variante, le dispositif 32 de convoyage est formé, au moins en partie, par un moteur 35 linéaire.

Un exemple de réalisation d'un tel moteur 35 linéaire est représenté à la figure 5. Les organes 33 de préhension sont portés par des navettes 34 indépendantes. Le moteur 35 linéaire comporte des rails 36 de guidage des navettes 34, par exemple par l'intermédiaire de galets 40 portés par les navettes 34. Le moteur 35 linéaire comporte aussi une voie 42 magnétique qui est agencée le long des rails 36. La voie 42 magnétique forme un stator comportant une série de bobinages 44 qui sont répartis le long de la voie 42 magnétique. Chaque bobinage 44 est commandé individuellement pour induire localement un champ magnétique de manière indépendante des autres bobinages. Les bobinages 44 sont par exemple commandés par une unité électronique de commande (non représentée) qui est programmée de manière appropriée. En commandant de manière appropriée les bobinages 44 de la voie 42 magnétique, un champ magnétique est localement créé pour produire par interaction avec l'aimant 38 une force magnétique de déplacement de chaque navette 34 le long des rails 36. En ce cas, il est possible de commander individuellement les déplacements de chaque navette 34 le long de la voie 42 magnétique.

Quel que soit le mode de réalisation du dispositif 32 de convoyage, les organes 33 de préhension circulent à la file le long d'une boucle 46 fermée. Comme illustré par exemple à la figure 2, la boucle présente ici une portion 46A rectiligne amont et une portion 46C rectiligne aval qui sont parallèles. Les portions 46A, 46C rectilignes sont jointes par deux portions 46B, 46D de virage à 180°.

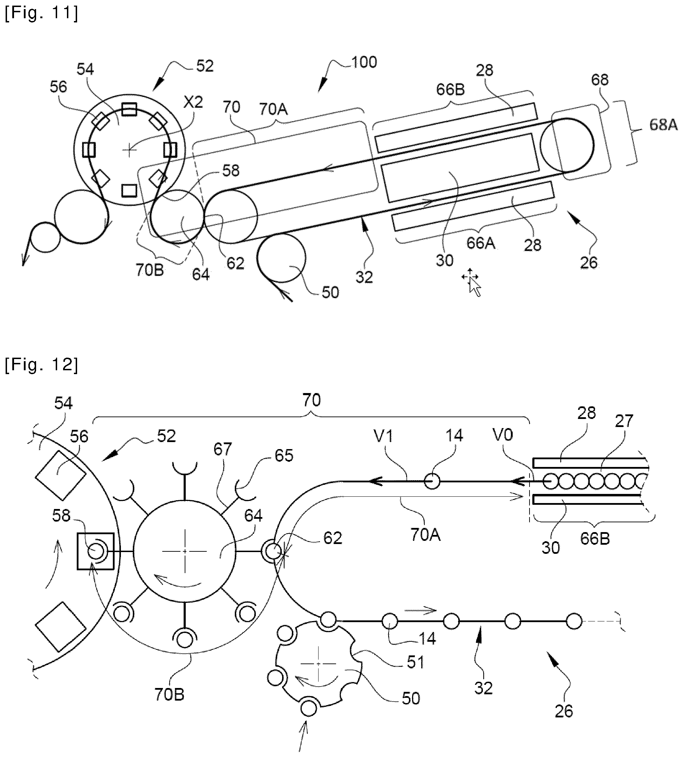

Les préformes 14 sont acheminées en file jusqu'à un point 48 d'entrée de la station 26 de chauffage par une roue 50 de transport. Il s'agit généralement d'une roue 50 comportant des encoches 51 à sa périphérie, dite "roue à encoches", comme illustré schématiquement à la figure 12. Chaque encoche 51 reçoit le corps 16 de la préforme 14 et le poids de la préforme 14 étant supporté par sa collerette 21.

Le point 48 d'entrée est situé sur une portion 46D de virage de la boucle 46 du dispositif 32 de convoyage.

A leur sortie du tunnel 27 de chauffage, le corps 16 des préformes 14 est rendu malléable par chauffage au-delà d'une température de transition vitreuse, tandis que le col 20 est maintenu à une température suffisamment basse pour conserver sa forme d'origine.

Les installations 10 de production des figures 1 et 2 comportent aussi une station 52 de formage des préformes 14 ainsi chauffées. La station 52 de formage est agencée en aval de la station 26 de chauffage en référence au flux de préformes 14 dans l'installation 10 de production.

La station 52 de formage comporte ici un carrousel 54 portant une pluralité d'unités 56 de formage. Le carrousel 54 est monté rotatif autour d'un axe "X2" central. Chaque unité 56 de formage est ainsi susceptible de déplacer les préformes 14/ récipients 12 finaux autour de l'axe "X2" du carrousel 54 entre un point 58 de chargement des préformes 14 et un point 60 de déchargement des récipients 12 finaux de reprendre un nouveau cycle.

Chaque unité 56 de formage comporte généralement un moule (non représenté) dans lequel au moins une préforme 14 est destinée à être reçue, et des moyens de formage (non représentés). Les moyens de formage sont généralement formés par une tuyère qui est apte à injecter un fluide sous pression, notamment de l'air, dans les préformes 14 reçues dans les moules. Pour permettre d'obtenir une bonne répartition du matériau thermoplastique dans les récipients 12 finaux, les moyens de formage comportent optionnellement une tige d'étirage qui est destinée à être insérée à l'intérieur de la préforme 14 pour provoquer son étirage dans un sens axial par contact avec le fond 18.

L'installation 10 de production comporte généralement des moyens de transport les préformes 14 chaudes qui les déplacent le long d'une partie de leur itinéraire depuis un point 62 de sortie de la station 26 de chauffage jusqu'au point 58 de chargement dans une unité 56 de formage de la station 52 de formage. Le point 62 de sortie de la station 26 de chauffage est ici situé dans la même portion 46D de virage de la boucle que le point 48 d'entrée.

A titre d'exemple non limitatif, de tels moyens de transport comportent généralement une roue 64 de transfert. La roue 64 de transfert est munie à sa périphérie de pinces 65 qui sont aptes à saisir chaque préforme 14 par son col 20, comme illustré schématiquement à la figure 12. En effet, seul le col 20 de la préforme 14 est susceptible d'être saisie puisque le corps 16 de la préforme 14 a été rendu malléable par chauffage. Pour pouvoir adapter le pas entre deux préformes 14 au pas requis dans la station 52 de formage, les pinces 65 sont généralement portées par l'intermédiaire de bras 67 montés pivotants sur la roue 64 de transfert, aussi illustrés à la figure 12. Les pinces 65 peuvent aussi être montées coulissantes le long des bras 67. Le mouvement des bras 67 est alors commandé par un mécanisme de commande à cames de sorte que toutes les préformes 14 suivent le même profil de vitesse lors de leur transfert. Dans les exemples représentés aux figures 1 et 2, les pinces 65 saisissent les préformes au point 62 de sortie de la station 52 de formage, prenant ainsi le relais du dispositif 32 de convoyage, puis elles déposent les préformes dans l'unité 56 de formage associée de la station 52 de formage.

Pendant leur passage dans la station 26 de chauffage, le corps 16 de chaque préforme 14 est chauffé selon un profil de chauffage souhaité dans la station 26 de chauffage.

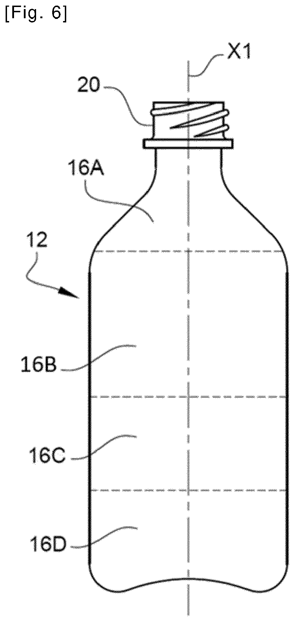

En variante de l'invention, le corps 16 de chaque préforme 14 est chauffé de manière différenciée selon des zones spécifiques du corps 16, dites "zones de chauffe différenciée". Ainsi, on a représenté à la figure 6 un récipient 12 final obtenu par formage du corps 16 de la préforme 14. Dans l'exemple non limitatif représenté à la figure 6, le corps 16 du récipient 12 final est ici divisé en plusieurs zones de chauffe différenciée dans le sens axial.

Une première zone 16A du corps 16 du récipient 12 final située directement sous le col 20 présente une forme conique. La géométrie de cette première zone 16A lui confère des propriétés mécaniques telles qu'il n'est pas nécessaire que l'épaisseur de matériau de sa paroi 17 soit très importante.

Juste au-dessous de cette première zone 16A se trouve une deuxième zone 16B globalement cylindrique qui correspond généralement à l'endroit où un utilisateur va saisir le récipient 12 final. De ce fait, cette deuxième zone 16B doit présenter des propriétés de résistance mécanique permettant sa préhension sans écrasement du récipient 12 final. La paroi 17 de cette deuxième zone 16B est généralement plus épaisse que la première zone 16A. Par exemple la paroi 17 est plus épaisse et/ou la paroi 17 présente des cannelures pour renforcer sa résistance à l'écrasement.

Juste au-dessous de cette deuxième zone 16B se trouve une troisième zone 16C globalement cylindrique. Cette troisième zone 16C ne présente pas de fonction particulière. De ce fait, cette troisième zone 16C présente généralement une épaisseur plus faible que celle de la deuxième zone 16B.

Enfin, juste au-dessous de cette troisième zone 16C se trouve une quatrième zone 16D de fond qui correspond à la zone qui supporte le poids du récipient 12 final et de son contenu. De ce fait, cette quatrième zone 16D doit présenter des propriétés de résistance mécanique permettant d'éviter son écrasement sous l'effet du poids. La paroi 17 de cette quatrième zone 16D comporte généralement une plus grande épaisseur que les première et troisième zones 16A, 16C. Par exemple la paroi 17 est plus épaisse et/ou la paroi 17 présente des nervures pour renforcer sa résistance à l'écrasement.

Selon d'autres exemples non représentés, le récipient final peut aussi présenter une forme non axisymétrique. En ce cas, certaines zones, cette fois ci réparties angulairement et non axialement, du corps 16 de la préforme 14 sont destinées à être plus étirées que d'autres. Le chauffage des préformes 14 selon un tel profil de températures est généralement connu sous le terme de "chauffe préférentiel".

On comprend donc que la répartition de la matière n'est pas réalisée uniformément selon l'axe "X1" principal du récipient 12 final pendant l'opération de formage. A cet égard, le corps 16 de la préforme 14 est déformé de manière différenciée selon les zones pendant l'opération de formage. Comme cela sera expliqué par la suite, différentes zones de chauffe différenciée du corps 16 de la préforme 14 peuvent donc nécessiter un chauffage à des températures différentes. Ces zones sont représentées à la figure 4 par des traits interrompus qui divisent le corps 16 en quatre.

Par ailleurs, que le corps 16 de la préforme 14 soit chauffé de manière homogène ou différenciée, il est préférable que, au moment du formage des préformes 14, leur paroi 17 présente, dans leur épaisseur, un gradient de température croissant depuis sa face 22 externe vers sa face 24 interne selon le sens de l'épaisseur. Un tel gradient permet d'obtenir un récipient 12 final de qualité requise. De plus, le formage de la préforme 14 requiert une pression de soufflage moins importante avec un tel gradient de température.

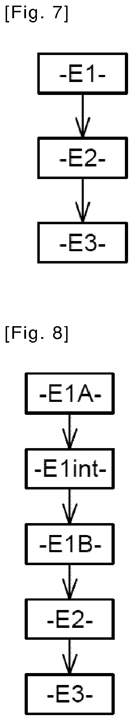

Pour obtenir un récipient 12 final de bonne qualité, il est ainsi connu de soumettre chaque préforme 14 à un procédé de conditionnement thermique qui est illustré à la figure 7.

L'itinéraire de production est divisé en plusieurs tronçons qui seront par la suite appelés trajets.

Le procédé de conditionnement thermique comporte classiquement au moins une première étape "E1" de chauffage du corps 16 de chaque préforme 14 par transport le long d'un trajet 66 de chauffage exposé à un rayonnement chauffant. On appelle "trajet 66 de chauffage" uniquement le tronçon d'itinéraire de production le long duquel les préformes 14 sont exposées au rayonnement chauffant émis par les émetteurs 28 de chauffage. Ainsi, le trajet 66 de chauffage commence dès que les préformes 14 sont exposées au rayonnement chauffant des émetteurs 28 de chauffage et il termine aussitôt que les préformes 14 ne sont sensiblement plus exposées au rayonnement chauffant des émetteurs 28 de chauffage. Le trajet 66 de chauffage correspond ainsi globalement au tronçon d'itinéraire de production qui traverse le tunnel 27 de chauffage.

En outre, dans le cas de l'installation 10 de production représentée à la figure 1, qui comporte deux tunnels 27 de chauffage, le trajet 66 de chauffage est divisé en un tronçon 66A amont de chauffage et en un tronçon 66B aval de chauffage. Comme illustré à la figure 8, l'étape "E1" de chauffage est alors divisée en deux sous-étapes "E1A", "E1B" de chauffage successives. Les deux sous-étapes "E1A", "E1B" de chauffage sont séparées par une étape "E1int" de transport intermédiaire des préformes 14 en file depuis une extrémité aval du tronçon 66A amont de chauffage jusqu'à une extrémité amont du tronçon 66B aval de chauffage le long d'un trajet 68 de transition. Ainsi le tronçon 66A amont de chauffage et le tronçon 66B aval de chauffage sont reliés par le trajet 68 de transition. Le long du trajet 68 de transition les préformes 14 ne sont pas exposées au rayonnement chauffant émis par les émetteurs 28 de chauffage.

Le dispositif 32 de convoyage est commandé de manière que les préformes 14 sortent du trajet 66 de chauffage avec une cadence "R" de production déterminée, par exemple par un opérateur. Cette cadence "R" de production correspond au nombre de bouteilles que l'on souhaite produire par unité de temps.

La première étape "E1" de chauffage est immédiatement suivie d'une deuxième étape "E2" de diffusion de la chaleur emmagasinée dans chaque préforme 14 lors de la première étape "E1" de chauffage. Lors de cette deuxième étape "E2" de diffusion, les préformes 14 sont transportées en file le long d'un trajet 70 de diffusion, représenté dans un cadre aux figures, qui n'est pas exposé au rayonnement chauffant et qui s'étend depuis une extrémité aval du trajet 66 de chauffage jusqu'à la station 52 de formage des préformes 14.

Lors de cette deuxième étape "E2" de diffusion, la chaleur accumulée dans le corps 16 de la préforme 14 va se diffuser dans la paroi 17 de manière à produire le gradient recherché dans son épaisseur.

Cette étape "E2" de diffusion doit ainsi durer suffisamment longtemps pour permettre l'instauration de ce gradient, mais elle ne doit pas être trop longue pour que la limite entre les zones de chauffe différenciée ne devienne trop floue. Elle ne doit pas non plus être trop longue pour éviter l'apparition de points trop chauds ou trop froids dans le corps 16. Il est généralement admis que la durée de cette étape "E2" de diffusion, dite "durée "D" de diffusion", doit demeurer dans un intervalle déterminé en fonction du modèle de préforme 14 pour éviter les problèmes évoqués précédemment tout en permettant l'apparition du gradient de température désiré.

Enfin, à l'issue de cette étape "E2" de diffusion, les préformes 14, arrivées au point 58 de chargement, subissent une troisième étape "E3" de transfert dans les unités 56 de formage de la station 52 de formage à ladite cadence "R" de production déterminée. Cela signifie que les préformes 14 sortent de la station 26 de chauffage et elles entrent dans la station 52 de formage à la même cadence "R" de production.

Lors de cette troisième étape "E3" de transfert, les préformes 14 sont, par exemple, placées sur un support de formage, notamment dans un moule, de l'unité 56 de formage. Ainsi, le trajet 70 de diffusion se termine lorsque les préformes 14 ont été placées dans le support de formage, notamment le moule.

De manière connue, pour produire un récipient 12 final de bonne qualité, il est connu d'agir sur de nombreux paramètres tels que la cadence "R" de production, la puissance de chauffage, le cas échéant la puissance de ventilation, etc. Ces paramètres sont des consignes de commande qui sont réglées par un opérateur au début d'une phase de production d'un lot de récipients 12 finaux. Comme expliqué précédemment, dans ces installations 10 réalisées selon l'état de la technique, la durée "D" de diffusion est une contrainte qui limite la plage de fonctionnement dans laquelle la cadence "R" de production peut être commandée.

En effet, lorsque les moyens de convoyage sont formés par des organes 33 de préhension qui sont liés mécaniquement les uns aux autres, il n'est physiquement pas possible de faire varier la durée "D" de diffusion indépendamment de la cadence "R" de production.

En outre, même lorsque le dispositif 32 de convoyage à chaîne a été remplacé par un moteur 35 linéaire, la durée "D" de diffusion a continué à être considérée uniquement comme une contrainte et non comme une consigne de commande susceptible d'être commandée indépendamment de la cadence "R" de production.

Ceci se traduit notamment structurellement par le fait que la distance parcourue par les navettes 34 après leur sortie du tunnel 27 de chauffage est de toute manière beaucoup trop courte pour permettre de commander indépendamment la durée "D" de diffusion et la cadence "R" de production.

L'invention propose d'obtenir des récipients 12 finaux de qualité identique indépendamment de la cadence "R" de production en garantissant que toutes les préformes 14 pour la production d'un même modèle de récipient 12 final présentent une durée "D" de diffusion identique.

L'invention permet aussi d'étendre la plage de fonctionnement sur laquelle la cadence "R" de production peut être commandée.

A cet effet, l'invention propose des installations 100 de production dans lesquelles le trajet 70 de diffusion comporte au moins un tronçon 70A tampon final que les préformes 14 parcourent en une durée "Da" ajustable. En adaptant ladite durée "Da" ajustable, la durée "D" de diffusion peut ainsi être commandée indépendamment de la cadence "R" de production.

De manière générale, la longueur du tronçon 70A tampon final doit être suffisante pour permettre de faire varier la durée "Da" ajustable sur un intervalle significativement grand par rapport à la durée "D" de diffusion comme cela sera expliqué par la suite.

La durée de déplacement, dite durée "Db" dépendante, des préformes 14 sur certains tronçons, dits tronçons 70B dépendant, du trajet 70 de diffusion peut demeurer proportionnelle à la cadence "R" de production.

C'est notamment le cas du tronçon de trajet 70 de diffusion correspondant à la prise en charge des préformes 14 par la roue 64 de transfert. En effet, la rotation de la roue 64 de transfert est toujours synchronisée avec la rotation du carrousel 54.

C'est aussi le cas pour les préformes 14 circulant sur un dispositif 32 de convoyage constitué d'une chaîne fermée.

Le tronçon 70A tampon final est ici réalisé au moyen d'un moteur 35 linéaire dans lequel les organes 33 de préhension des préformes 14 sont embarqués sur des navettes 34 qui se déplacent le long d'une voie 42 magnétique, de manière similaire à ce qui est illustré à la figure 5. Les organes 33 de préhension peuvent être formés par des mandrins, comme illustré à la figure 5, mais aussi par des pinces 65 ou tout autre moyen de préhension. Ainsi, les préformes 14 sont transportées le long du tronçon 70A tampon final par des navettes 34 mises en mouvement indépendamment les unes des autres en commandant la voie 42 magnétique. Un tel dispositif de transport permet de faire varier la vitesse des navettes 34 indépendamment les unes des autres et indépendamment de la cadence "R" de production.

Selon une variante non représentée de l'invention, le transport des préformes 14 le long du tronçon 70A tampon final peut être réalisé au moyen d'une roue à encoches, similaire à la roue 50 d'entrée, dont la vitesse rotation peut être commandée indépendamment de la cadence "R" de production. Cette roue à encoches peut être alimentée par un dispositif de convoyage à moteur 35 linéaire permettant d'adapter la vitesse des préformes 14 entrantes à la vitesse de rotation de la roue à encoches. Le déchargement des préformes 14 de la roue à encoches est aussi réalisé au moyen d'un dispositif de convoyage à moteur 35 linéaire permettant d'adapter la vitesse des organes 33 de préhension à la vitesse de rotation de la roue à encoches. Lors du fonctionnement d'une telle roue à encoches, toutes les encoches peuvent être utilisées, ou seulement une partie des encoches en fonction de la durée "Da" ajustable souhaitée.

On a représenté plusieurs exemples non limitatifs de réalisation de telles installations 100 de production. Ces installations 100 de production présentent de nombreuses similitudes structurelles avec les installations 10 de production de l'état de la technique déjà décrites en référence aux figures 1 et 2. Seules les différences avec les installations 10 de production de l'état de la technique seront donc décrites par la suite.

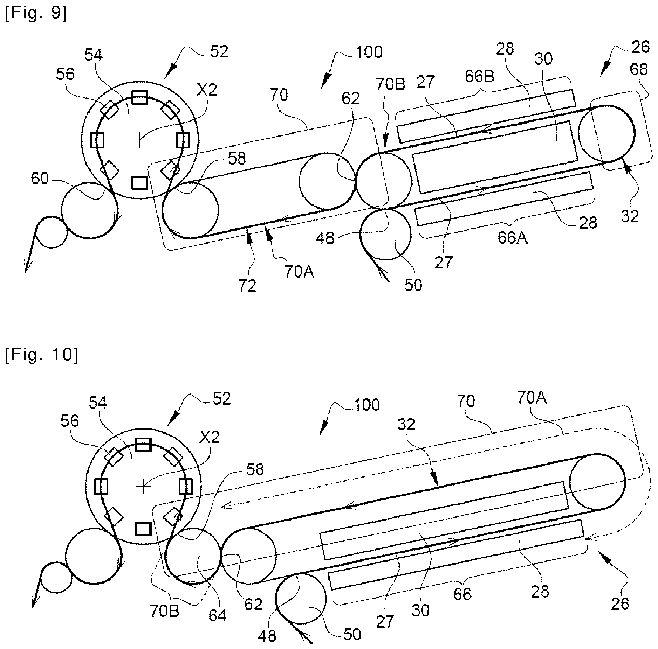

Dans l'exemple représenté à la figure 9, un dispositif 72 de convoyage à moteur 35 linéaire est interposé entre la station 26 de chauffage et la station 52 de formage. Dans ce mode de réalisation, la roue 64 de transfert a été remplacée par le dispositif 72 de convoyage à moteur 35 linéaire par rapport à l'installation 10 de production de la figure 1. Ce mode de réalisation est bien entendu applicable aussi à une installation 100 de production comportant des émetteurs 28 de chauffage à laser, comme illustré à la figure 2.

Dans ce mode de réalisation de l'invention, le dispositif 32 de convoyage de la station 26 de chauffage est par exemple formé par une chaîne dont chaque maillon porte un organe 33 de préhension. En ce cas, le tronçon de trajet 70 de diffusion qui s'étend entre l'extrémité aval du tronçon 66B aval de chauffage et le point 62 de sortie de la station 26 de chauffage forme un tronçon 70B dépendant que les préformes parcourent en une durée "Db" dépendante de la cadence "R" de production.

Le tronçon 70A tampon final s'étend alors depuis le point 62 de sortie de la station 26 de chauffage jusqu'au point 58 de chargement de la station 52 de formage. Les navettes 34 se déplacent le long d'un circuit en boucle fermée formé de deux droites rectilignes parallèles reliées par des virages à 180°. Le tronçon 70A tampon final s'étend notamment sur une des droites rectilignes. Cette forme permet donc de bénéficier d'une longueur de tronçon 70A tampon final suffisante pour faire varier la durée "Da" ajustable sur un grand intervalle de valeurs.

En variante, lorsque le dispositif 32 de convoyage de la station 26 de chauffage est formé par un moteur 35 linéaire, la totalité du trajet 70 de diffusion est formée par un tronçon 70A tampon final.

Dans l'exemple représenté à la figure 10, le dispositif 32 de convoyage de la station 26 de chauffage est formé par un moteur 35 linéaire. En ce cas, le tunnel 27 de chauffage est avantageusement agencé sur la portion 46A rectiligne droite amont, tandis que le tronçon 70A tampon final est réalisé sur le tronçon 46C rectiligne aval de la boucle 46. Ainsi, le tronçon 70A tampon final bénéficie d'une grande longueur. Le transfert des préformes 14 entre la station 26 de chauffage et la station 52 de formage est ici réalisé par une roue 64 de transfert en une durée "Db" dépendante de la cadence "R" de production.

Dans l'exemple représenté à la figure 11, l'installation 100 de production ressemble à celle de la figure 1. Le dispositif 32 de convoyage de la station 26 de chauffage est formé par un moteur 35 linéaire. Cependant, le tronçon 66B aval du trajet 66 de chauffage aval ne s'étend que sur une petite fraction amont de la portion 46C rectiligne aval, laissant ainsi une longueur suffisante pour le tronçon 70A tampon final entre la fin du trajet 66 de chauffage aval et le point 62 de sortie des préformes 14 vers la roue 64 de transfert. Le transfert des préformes 14 entre la station 26 de chauffage et la station 52 de formage est ici réalisé par une roue 64 de transfert en une durée "Db" dépendante de la cadence "R" de production.

Lors de la mise en oeuvre du procédé de conditionnement thermique, en début de production, une consigne de durée "D" de diffusion est sélectionnée par un opérateur. La durée "Da" ajustable est commandée automatiquement par une unité de commande électronique en fonction de la cadence "R" de production sélectionnée pour maintenir la durée "D" de diffusion égale à la consigne indépendamment de la cadence "R" de production.

Ainsi, la consigne de durée "D" de diffusion peut être sélectionnée indépendamment de la cadence "R" de production sélectionnée par un opérateur en début de production.

En outre, l'opérateur peut aussi intervenir en cours de production pour faire varier la cadence "R" de production.

Lorsque le trajet 70 de diffusion comporte au moins un tronçon 70B dépendant, la durée "D" de diffusion est égale à la somme de la durée "Db" dépendante et de la durée "Da" ajustable. La durée "Da" ajustable est donc modifiée pour conserver la durée "D" de diffusion égale à la consigne afin de compenser les variations de durée "Db" dépendante. Ainsi, lorsque la cadence "R" de production augmente, la durée "Da" ajustable est automatiquement allongée de manière à maintenir la durée "D" de diffusion égale à ladite consigne. Au contraire, lorsque la cadence "R" de production est réduite, la durée "Da" ajustable est automatiquement réduite pour que la durée "D" de diffusion demeure égale à ladite consigne.

La durée "Da" ajustable est susceptible d'occuper plusieurs valeurs dans un intervalle délimité par une borne inférieure minimale et par une borne supérieure pour une cadence "R" de production donnée.

En variante, lorsque le trajet 70 de diffusion est formé uniquement d'un tronçon 70A tampon final, la durée "Da" ajustable est égale à la durée "D" de diffusion. Dans ce cas, la durée "Da" ajustable demeure constante indépendamment de la cadence "R" de production pour rester égale à la consigne de durée "D" de diffusion.

On a représenté à la figure 12 un exemple de fonctionnement de l'installation 100 de production pour une cadence "R" de production donnée, pour laquelle la durée "Da" ajustable correspond à sa borne inférieure. II s'agit, à titre non limitatif de l'installation 100 de production représentée à la figure 11, le fonctionnement étant similaire pour les autres modes de réalisation de l'invention. On observe que cette borne inférieure dépend de la longueur du tronçon 70A tampon final et de la vitesse maximale susceptible d'être atteinte par la préforme 14 en chaque point du tronçon 70A tampon final. Pour cette valeur de la durée "Da" ajustable, les préformes 14 circulent de manière très écartées les unes des autres du fait de l'accélération qu'elles subissent en sortie du trajet 66 de chauffage. La vitesse des préformes 14 sur le tronçon 70A tampon final est indiquée par un vecteur V1, tandis que la vitesse des préformes 14 sortant du trajet 66 de chauffage est indiquée par un vecteur V0. La vitesse V0 est sensiblement inférieure à la vitesse V1 qui correspond ici à la vitesse maximale des navettes 34 le long du tronçon 70A tampon final.

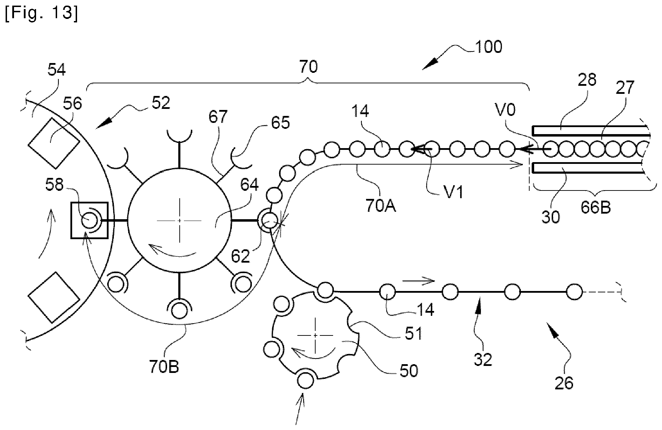

On a représenté à la figure 13 un exemple de fonctionnement de l'installation 100 de production pour une cadence "R" de production donnée, pour laquelle la durée "Da" ajustable correspond à sa borne supérieure. On observe alors que cette borne supérieure dépend de la longueur du tronçon 70A tampon final et de la cadence "R" de production. Pour cette valeur de la durée "Da" ajustable, les préformes 14 circulent en étant le plus rapprochées possible les unes des autres. Cette borne supérieure dépend de la cadence "R" de production car il faut que les préformes 14 circulent tout de même suffisamment vite pour ne pas qu'une préforme 14 arrivant du trajet 66 de chauffage ne percute les autres. La vitesse des préformes 14 sur le tronçon 70A tampon final est indiquée par le vecteur V1, tandis que la vitesse des préformes 14 sortant du trajet 66 de chauffage est indiquée par le vecteur V0. La vitesse V0 est sensiblement égale à la vitesse V1.

La cadence "R" de production est susceptible d'être commandée entre une cadence "Rmax" maximale et une cadence "Rmin" minimale lors de la production de récipients 12 finaux. Ces limites pour la cadence "R" de production dépendent de très nombreux facteurs différents de la durée "D" de diffusion, notamment de la motorisation des moyens de convoyage, de la puissance des émetteurs 28 de chauffage, de l'opération de formage, etc.

En revanche, comme expliqué précédemment, il est possible de jouer sur la longueur du tronçon 70A tampon final et/ou sur la vitesse maximale des préformes 14 sur le tronçon 70A tampon final pour obtenir un intervalle de durée "Da" ajustable suffisamment étendu pour que la durée "D" de diffusion puisse demeurer constante pour toutes les cadences "R" de production comprises entre la cadence "Rmin" minimale et la cadence "Rmax" maximale. La longueur du tronçon 70A tampon final et/ou la vitesse maximale des préformes 14 sur le tronçon 70A tampon final sont ainsi déterminés de manière que la durée "Da" ajustable puisse être commandée afin qu'au moins une valeur de durée "D" de diffusion, de préférence un intervalle de valeurs de durée "D" de diffusion, demeure constante pour toute cadence "R" de production comprise entre la cadence "Rmax" maximale et la cadence "Rmin" minimale.

Par exemple, la vitesse de circulation maximale des préformes sur le tronçon 70A tampon final est d'environ 5 m/s.

La longueur du tronçon 70A tampon final est par exemple comprise entre 0,8 m et 6,8 m.

La durée "D" de diffusion est par exemple comprise entre 2,06 s et 9,14 s.

Comme expliqué précédemment, pour pouvoir obtenir des récipients 12 finaux de même qualité, il est préférable que toutes les préformes 14 présente une répartition de température identique au moment de leur formage. La durée "Da" ajustable est donc commandée de manière que la durée "D" de diffusion soit identique pour chaque préforme 14.

Dans les installations 100 de production représentés aux figures 9 à 11, les préformes 14 sortent une par une du trajet 66 de chauffage à la cadence "R" de production et elles sont transférées successivement une par une dans la station 52 de formage avec ladite cadence "R" de production pendant l'étape "E3" de transfert lorsqu'elles arrivent au point 58 de chargement. Les préformes 14 sortent une par une du trajet 66 de chauffage à ladite cadence "R" de production. Ainsi, toutes les préformes 14 se déplacent le long du tronçon 70A tampon final avec un profil de vitesses identique. Cela signifie qu'en chaque point du trajet 70 de diffusion, notamment du tronçon 70A tampon final, toutes les préformes 14 présentent une même vitesse de déplacement.

En variante, un nombre déterminé de plusieurs préformes 14 successives forment un groupe, les préformes 14 d'un même groupe étant transférées simultanément dans la station 52 de formage à ladite cadence "R" de production, correspondant à un nombre de récipients 12 finaux produits par unité de temps. Or, les préformes 14 sortent une par une du trajet 66 de chauffage à la cadence "R" de production. Cela signifie que la première préforme 14 du groupe devra attendre que les préformes 14 suivantes du groupe la rejoigne pour pouvoir procéder au transfert vers la station 52 de formage en fin de trajet 70 de diffusion. Pour que toutes les préformes 14 soit soumises à une même durée "D" de diffusion, les préformes 14 successives d'un même groupe se déplacent le long du tronçon 70A tampon final avec des profils de vitesses différents de manière que la durée "D" de diffusion soit la même pour toutes les préformes 14 du groupe. Par exemple, les préformes 14 d'un même groupe parcourront le tronçon 70A tampon final de moins en moins vite pour que chaque préforme 14 présente la même durée "D" de diffusion au moment de l'étape "E3" de transfert.

Ainsi, la première préforme 14 du groupe parcourt le trajet 70 de diffusion avec un temps de déplacement déterminé et elle attends les autres préformes 14 en fin de trajet 70 de diffusion pendant un temps d'attente déterminé. L'addition du temps d'attente et du temps de déplacement est égale à la durée "D" de diffusion. La préforme 14 suivante présentera un temps de déplacement légèrement supérieur et un temps d'attente légèrement inférieur de manière que l'addition de ces deux temps soit égale à la durée "D" de diffusion, et ainsi de suite pour les préformes 14 suivantes. Le temps d'attente de la dernière préforme 14 peut être négligeable en fonction de la durée "D" de diffusion recherchée.

Comme représenté aux figures 9 et 11, lorsque l'installation 100 de production comporte un trajet 68 de transition entre deux tronçon 66A, 66B de chauffage, un changement de cadence "R" de production peut aussi influer sur la façon dont la température va se répartir à l'intérieur des parois 17 des préformes 14 avant que celles-ci n'entrent dans le deuxième tronçon 66B de chauffage. Bien que ce trajet 68 de transition soit très court et que l'influence d'un changement de cadence "R" de production sur la durée que met une préforme 14 à parcourir ce trajet 68 de transition soit marginale, il peut être souhaitable que toutes les préformes 14 parcourent ce trajet 68 de transition en une durée qui puisse être sélectionnée indépendamment de la cadence "R" de production.

Pour ce faire, le trajet 68 de transition comporte au moins un tronçon 68A tampon intermédiaire que les préformes 14 parcourent en une durée "Dr" réglable qui est commandée indépendamment de la cadence "R" de production.

De la même manière que pour le tronçon 70A tampon final, ce tronçon 68A tampon intermédiaire est réalisé au moyen d'un moteur 35 linéaire dans lequel les organes 33 de préhension des préformes 14 sont embarqués sur des navettes 34 qui se déplacent le long d'une voie 42 magnétique. Ainsi, les préformes 14 sont transportées le long du tronçon 70A tampon final par des navettes 34 mises en mouvement indépendamment les unes des autres en commandant la voie 42 magnétique. Un tel dispositif de transport permet de faire varier la vitesse des navettes 34 indépendamment les unes des autres et indépendamment de la cadence "R" de production.

Selon une autre variante de réalisation, le transport des préformes 14 le long du tronçon 68A tampon intermédiaire peut être réalisé au moyen d'une roue de transport des navettes qui prend le relais de la voie 42 magnétique pour déplacer les navettes et dont la vitesse rotation peut être commandée indépendamment de la cadence "R" de production. Cette roue de transport peut être alimentée par un dispositif de convoyage à moteur 35 linéaire permettant d'adapter la vitesse des préformes 14 entrantes à la vitesse de rotation de la roue de transport. Ce dispositif de convoyage à moteur 35 linéaire permet par exemple de transporter les préformes 14 sur la portion 46A rectiligne amont de la boucle. Le déchargement des préformes 14 de la roue de transport est aussi réalisé au moyen d'un dispositif de convoyage à moteur 35 linéaire permettant d'adapter la vitesse des organes 33 de préhension à la vitesse de rotation de la roue de transport. Ce dispositif de convoyage permet par exemple de transporter les préformes 14 le long de la portion 46C rectiligne aval de la boucle. Cette variante de réalisation est particulièrement adaptée lorsque le trajet 68 de transition est formé par une portion 46B de virage à 180° de la boucle comme cela est représenté aux figures 9 et 11.

Il est ainsi possible de commander la durée "Dr" réglable de manière que la durée de l'étape "E1int" de transport intermédiaire soit indépendante de la cadence "R" de production.

L'invention permet très avantageusement de fixer indépendamment une consigne de durée "D" de diffusion et une consigne de cadence "R" de production. Cela permet notamment d'améliorer la qualité des récipients 12 finaux.

## Revendications

1. Procédé de conditionnement thermique de préformes (14) avant leur formage, notamment par étirage-soufflage, dans une installation (100) de production de récipients (12), le procédé comportant :
- au moins une première étape (E1) de chauffage de chaque préforme (14) par transport le long d'un trajet (66) de chauffage exposé à un rayonnement chauffant, les préformes (14) sortant du trajet (66) de chauffage avec une cadence (R) de production déterminée ;
- une deuxième étape (E2) de diffusion de la chaleur emmagasinée dans chaque préforme lors de laquelle les préformes (14) sont transportées en file le long d'un trajet (70) de diffusion qui n'est pas exposé au rayonnement chauffant et qui s'étend depuis une extrémité aval du trajet (66) de chauffage jusqu'à une station (52) de formage des préformes (14) ;
- une troisième étape (E3) de transfert des préformes, à l'issue de l'étape (E2) de diffusion, dans des unités (56) de formage de la station (52) de formage à ladite cadence (R) de production déterminée,
**caractérisé en ce que** le trajet (70) de diffusion comporte au moins un tronçon (70A) tampon final que les préformes (14) parcourent en une durée (Da) ajustable.

2. Procédé selon la revendication précédente, **caractérisé en ce que** la durée de l'étape de diffusion, dite "durée (D) de diffusion", est commandée indépendamment de la cadence (R) de production par adaptation de la durée (Da) ajustable.

3. Procédé selon la revendication précédente, **caractérisé en ce qu'**une consigne de durée (D) de diffusion est sélectionnée, la durée (Da) ajustable étant commandée automatiquement en fonction de la cadence (R) de production pour maintenir la durée (D) de diffusion égale à la consigne indépendamment de la cadence (R) de production.

4. Procédé selon l'une quelconque des revendications précédentes, **caractérisé en ce que** la durée (Da) ajustable est commandée de manière que la durée (D) de diffusion soit identique pour chaque préforme.

5. Procédé selon l'une quelconque des revendications précédentes, **caractérisé en ce que** la durée (Da) ajustable est susceptible d'occuper plusieurs valeurs dans un intervalle délimité par une borne inférieure minimale et par une borne supérieure pour une cadence (R) de production donnée.

6. Procédé selon la revendication précédente, **caractérisé en ce que** la borne inférieure dépend de la longueur du tronçon tampon final et de la vitesse maximale susceptible d'être atteinte par la préforme en chaque point du tronçon tampon final.

7. Procédé selon l'une quelconque des revendications 5 ou 6, **caractérisé en ce que** la borne supérieure dépend de la longueur du tronçon tampon final et de la cadence (R) de production.

8. Procédé selon l'une quelconque des revendications précédentes, **caractérisé en ce que** la cadence (R) de production est susceptible d'être commandée entre une cadence (Rmax) maximale et une cadence (Rmin) minimale lors de la production de récipients (12), la longueur du tronçon (70A) tampon final et/ou la vitesse maximale des préformes (14) sur le tronçon (70A) tampon final étant déterminée de manière que la durée (Da) ajustable puisse être commandée afin qu'au moins une valeur de durée (D) de diffusion puisse demeurer constante pour toute cadence (R) de production comprise entre la cadence (Rmax) maximale et la cadence (Rmin) minimale.

9. Procédé selon l'une quelconque des revendications précédentes, **caractérisé en ce que** les préformes sont transportées le long du tronçon (70A) tampon final par des navettes (34) mises en mouvement indépendamment les unes des autres au moyen d'un moteur (35) linéaire.

10. Procédé selon la revendication précédente prise en combinaison avec la revendication 4, **caractérisé en ce que** les préformes (14) se déplacent le long du tronçon (70A) tampon final avec un profil de vitesses identique.

11. Procédé selon l'une quelconque des revendications précédentes, **caractérisé en ce que** les préformes (14) sont transférées successivement une par une dans la station (52) de formage.

12. Procédé selon l'une quelconque des revendications 1 à 10, **caractérisé en ce que** un nombre déterminé de plusieurs préformes (14) successives forment un groupe, les préformes d'un même groupe étant transférées simultanément dans la station (52) de formage.

13. Procédé selon la revendication précédente prise en combinaison avec la revendication 4, **caractérisé en ce que** les préformes (14) successives d'un même groupe se déplacent le long du tronçon (70A) tampon final avec des profils de vitesses différents de manière que la durée (D) de diffusion soit la même pour toutes les préformes (14) du groupe.

14. Procédé selon l'une quelconque des revendications précédentes, **caractérisé en ce que** l'étape (E1) de chauffage comporte deux sous-étapes (E1A, E1B) de chauffage successives précédent l'étape (E2) de diffusion, les deux sous-étapes (E1A, E1B) de chauffage étant séparées par une étape (E1int) de transport intermédiaire des préformes en file, le trajet (66) de chauffage étant divisé en un tronçon (66A) amont de chauffage et en un tronçon (66B) aval de chauffage reliés par un trajet (68) de transition.

15. Procédé selon la revendication précédente, **caractérisé en ce que** le trajet (68) de transition comporte au moins un tronçon (68A) tampon intermédiaire que les préformes (14) parcourent en une durée (Dr) réglable qui est commandée indépendamment de la cadence (R) de production.

## Patentansprüche

1. Verfahren zur thermischen Konditionierung von Vorformlingen (14) vor ihrem Formen, insbesondere durch Streckblasformen, in einer Anlage (100) zur Produktion von Behältern (12), wobei das Verfahren Folgendes umfasst:
- mindestens einen ersten Schritt (E1) des Erhitzens jedes Vorformlings (14) durch Transportieren entlang einer Heizstrecke (66), die einer Heizstrahlung ausgesetzt ist, wobei die Vorformlinge (14) die Heizstrecke (66) mit einer bestimmten Produktionsrate (R) verlassen;
- einen zweiten Schritt (E2) des Verteilens der in jedem Vorformling gespeicherten Wärme, bei dem die Vorformlinge (14) in einer Reihe entlang einer Verteilungsstrecke (70) transportiert werden, die nicht der Heizstrahlung ausgesetzt ist und die sich von einem stromabwärtigen Ende der Heizstrecke (66) zu einer Station (52) zum Formen der Vorformlinge (14) erstreckt;
- am Ende des Verteilungsschritts (E2) einen dritten Schritt (E3) des Überführens der Vorformlinge in Formeinheiten (56) der Formgebungsstation (52) mit der bestimmten Produktionsrate (R),
**dadurch gekennzeichnet, dass** die Verteilungsstrecke (70) mindestens einen Endpufferabschnitt (70A) aufweist, den die Vorformlinge (14) in einer einstellbaren Zeit (Da) durchlaufen.

2. Verfahren nach dem vorangehenden Anspruch, **dadurch gekennzeichnet, dass** die Dauer des Verteilungsschritts, die sogenannte "Verteilungszeit (D)", unabhängig von der Produktionsrate (R) durch Anpassung der einstellbaren Zeit (Da) gesteuert wird.

3. Verfahren nach dem vorangehenden Anspruch, **dadurch gekennzeichnet, dass** ein Sollwert der Verteilungszeit (D) ausgewählt wird, wobei die einstellbare Zeit (Da) in Abhängigkeit von der Produktionsrate (R) automatisch gesteuert wird, um die Verteilungszeit (D) unabhängig von der Produktionsrate (R) gleich dem Sollwert zu halten.

4. Verfahren nach einem der vorangehenden Ansprüche, **dadurch gekennzeichnet, dass** die einstellbare Zeit (Da) so gesteuert wird, dass die Verteilungszeit (D) für jeden Vorformling gleich ist.

5. Verfahren nach einem der vorangehenden Ansprüche, **dadurch gekennzeichnet, dass** die einstellbare Zeit (Da) mehrere Werte in einem Intervall einnehmen kann, das durch eine untere Mindestgrenze und durch eine obere Grenze für eine gegebene Produktionsrate (R) begrenzt ist.

6. Verfahren nach dem vorangehenden Anspruch, **dadurch gekennzeichnet, dass** die untere Grenze von der Länge des Endpufferabschnitts und der maximalen Geschwindigkeit, die vom Vorformling an jedem Punkt des Endpufferabschnitts erreicht werden kann, abhängt.

7. Verfahren nach einem der Ansprüche 5 oder 6, **dadurch gekennzeichnet, dass** die obere Grenze von der Länge des Endpufferabschnitts und der Produktionsrate (R) abhängt.

8. Verfahren nach einem der vorangehenden Ansprüche, **dadurch gekennzeichnet, dass** die Produktionsrate (R) bei der Produktion von Behältern (12) zwischen einer maximalen Rate (Rmax) und einer minimalen Rate (Rmin) steuerbar ist, wobei die Länge des Endpufferabschnitts (70A) und/oder die maximale Geschwindigkeit der Vorformlinge (14) auf dem Endpufferabschnitt (70A) so bestimmt wird, dass die einstellbare Zeit (Da) so gesteuert werden kann, dass mindestens ein Wert der Verteilungszeit (D) für jede Produktionsrate (R), die zwischen der maximalen Rate (Rmax) und der minimalen Rate (Rmin) liegt, konstant bleiben kann.

9. Verfahren nach einem der vorangehenden Ansprüche, **dadurch gekennzeichnet, dass** die Vorformlinge entlang des Endpufferabschnitts (70A) durch Trägerelemente (34) transportiert werden, die mit Hilfe eines Linearmotors (35) die unabhängig voneinander bewegt werden.

10. Verfahren nach dem vorangehenden Anspruch in Kombination mit Anspruch 4, **dadurch gekennzeichnet, dass** sich die Vorformlinge (14) entlang des Endpufferabschnitts (70A) mit einem identischen Geschwindigkeitsprofil bewegen.

11. Verfahren nach einem der vorangehenden Ansprüche, **dadurch gekennzeichnet, dass** die Vorformlinge (14) einzeln nacheinander in die Formgebungsstation (52) überführt werden.

12. Verfahren nach einem der Ansprüche 1 bis 10, **dadurch gekennzeichnet, dass** eine bestimmte Anzahl mehrerer aufeinanderfolgender Vorformlinge (14) eine Gruppe bildet, wobei die Vorformlinge einer selben Gruppe gleichzeitig in die Formgebungsstation (52) überführt werden.

13. Verfahren nach dem vorangehenden Anspruch in Kombination mit Anspruch 4, **dadurch gekennzeichnet, dass** sich die aufeinanderfolgenden Vorformlinge (14) einer selben Gruppe mit unterschiedlichen Geschwindigkeitsprofilen entlang des Endpufferabschnitts (70A) bewegen, sodass die Verteilungszeit (D) für alle Vorformlinge (14) der Gruppe gleich ist.

14. Verfahren nach einem der vorangehenden Ansprüche, **dadurch gekennzeichnet, dass** der Heizschritt (E1) zwei aufeinanderfolgende Heizunterschritte (E1A, E1B) umfasst, die dem Verteilungsschritt (E2) vorausgehen, wobei die beiden Heizunterschritte (E1A, E1B) durch einen dazwischenliegenden Schritt (E1int) zum Transport der Vorformlinge in einer Reihe getrennt sind, wobei die Heizstrecke (66) in einen stromaufwärtigen Heizabschnitt (66A) und in einen stromabwärtigen Heizabschnitt (66B) unterteilt ist, die durch eine Übergangsstrecke (68) verbunden sind.

15. Verfahren nach dem vorangehenden Anspruch, **dadurch gekennzeichnet, dass** die Übergangsstrecke (68) mindestens einen dazwischenliegenden Pufferabschnitt (68A) aufweist, den die Vorformlinge (14) in einer einstellbaren Zeit (Dr) durchlaufen, die unabhängig von der Produktionsrate (R) gesteuert wird.

## Claims

1. Method for thermally conditioning preforms (14) before they are formed, in particular by stretch blow-molding, in a facility (100) for producing containers (12), the method comprising:
- at least a first step (E1) of heating each preform (14) by transport along a heating path (66) exposed to heat radiation, the preforms (14) exiting the heating path (66) at a predetermined production rate (R);
- a second step (E2) of diffusing the heat stored in each preform during which the preforms (14) are transported in a line along a diffusion path (70) that is not exposed to the heat radiation and extends from a downstream end of the heating path (66) to a station (52) for forming the preforms (14) ;
- a third step (E3) of transferring the preforms, following the diffusion step (E2), into forming units (56) of the forming station (52) at said predetermined production rate (R),
**characterized in that** the diffusion path (70) comprises at least one final buffer section (70A) that the preforms (14) travel along in an adjustable duration (Da).

2. Method according to the preceding claim, **characterized in that** the duration of the diffusion step, referred to as the "diffusion duration (D)", is controlled independently of the production rate (R) by adapting the adjustable duration (Da).

3. Method according to the preceding claim, **characterized in that** a diffusion duration (D) setpoint is selected, the adjustable duration (Da) being controlled automatically as a function of the production rate (R) to keep the diffusion duration (D) equal to the setpoint independently of the production rate (R).

4. Method according to any one of the preceding claims, **characterized in that** the adjustable duration (Da) is controlled so that the diffusion duration (D) is identical for each preform.

5. Method according to any one of the preceding claims, **characterized in that** the adjustable duration (Da) can adopt a plurality of values in a range delimited by a minimum lower limit and an upper limit for a given production rate (R).

6. Method according to the preceding claim, **characterized in that** the lower limit depends on the length of the final buffer section and the maximum speed that the preform can reach at each point of the final buffer section.

7. Method according to either one of Claims 5 and 6, **characterized in that** the upper limit depends on the length of the final buffer section and the production rate (R).

8. Method according to any one of the preceding claims, **characterized in that** the production rate (R) can be controlled between a maximum rate (Rmax) and a minimum rate (Rmin) during the production of containers (12), the length of the final buffer section (70A) and/or the maximum speed of the preforms (14) on the final buffer section (70A) being determined so that the adjustable duration (Da) can be controlled so that at least one diffusion duration (D) value can remain constant for any production rate (R) between the maximum rate (Rmax) and the minimum rate (Rmin).

9. Method according to any one of the preceding claims, **characterized in that** the preforms are transported along the final buffer section (70A) by shuttles (34) moved independently of each other by means of a linear motor (35).

10. Method according to the preceding claim taken in combination with Claim 4, **characterized in that** the preforms (14) travel along the final buffer section (70A) with an identical speed profile.

11. Method according to any one of the preceding claims, **characterized in that** the preforms (14) are transferred one by one in succession into the forming station (52).

12. Method according to any one of Claims 1 to 10, **characterized in that** a predetermined number of a plurality of successive preforms (14) form a group, the preforms in a single group being transferred simultaneously into the forming station (52).

13. Method according to the preceding claim taken in combination with Claim 4, **characterized in that** the successive preforms (14) in a single group travel along the final buffer section (70A) with different speed profiles so that the diffusion duration (D) is the same for all of the preforms (14) in the group.

14. Method according to any one of the preceding claims, **characterized in that** the heating step (E1) comprises two successive heating sub-steps (E1A, E1B) prior to the diffusion step (E2), the two heating sub-steps (E1A, E1B) being separated by an intermediate step (E1int) of transporting the preforms in a line, the heating path (66) being divided into an upstream heating section (66A) and a downstream heating section (66B) connected by a transition path (68).

15. Method according to the preceding claim, **characterized in that** the transition path (68) comprises at least one intermediate buffer section (68A) that the preforms (14) travel along in an adjustable duration (Dr) that is controlled independently of the production rate (R).
